# EUROPEAN PATENT APPLICATION

(11) **EP 0 908 090 A2**
(43) Date of publication of application: **14.04.1999**
(21) Application number: 98308208.2
(22) Date of filing: 08.10.1998
(51) Int. Cl.: A01G 13/10

(54) **Device for protecting young plants or the like**

(30) Priority: 08.10.1997 GB 9721379
(71) Applicant: YKK Europe Limited, London EC1V 8AN (GB)
(72) Inventor: MacKinnon, Malcolm, Largs AyshireKA30 8TB (GB)
(74) Representative: Luckhurst, Anthony Henry William

(57) **Abstract**

A device for protecting young plants, trees or the like comprises a sheet of material 1 with complementary surface fastener portions 5, 9 along opposite edges 6, 8 to fasten the sheet 1 into a tube like shape for placing around a young plant or tree.

## Description

The present invention relates to a device for protecting young plants, trees or the like.

A young plant or tree is particularly vulnerable to attack by rabbits, deer and other animals while it is growing. One solution to this problem is to place a tube around the plant or tree. This solution does not come without its disadvantages. In particular, tubes are awkward and bulky to transport and as a result, the transportation costs are quite high relative to the cost of the tube. Construction of a tube on site is time consuming and involves nailing or stapling materials to wooden posts placed in the ground around the plant.

An object of the present invention is to provide a device for protecting plants which is both convenient to use and cheap to transport.

The present invention provides a device for protecting young plants, trees or the like, the device comprising a sheet of material which can be rolled or folded to a form a tube and a surface fastener on the sheet of material to fasten the sheet in the shape of a tube.

It is preferable, for ease of manufacture and transportation, if the material is provided in a roll and sheets of the required length can then be cut from the roll.

Very preferably, the surface fastener comprises a first fastener portion positioned at one edge of the sheet and the complementary surface fastener portion can be positioned at the opposite edge of the sheet, the edges and hence the surface fastener portions overlapping when the sheet is rolled to form a tube. Of course, in some cases, the fasteners may be positioned a little way in from the edge.

To fasten the tube so that it has a generally circular cross section, it is preferable if the first surface fastener portion and its second complementary surface fastener portion are positioned on opposing faces of the sheet of material.

The surface fasteners may be provided in strips of surface fastener type materials, e.g. hook and loop fasteners.

The strips of surface fastener material may be provided by continuous strips along the edges of the material or they may be provided as a series of spaced apart smaller strips along the edges of the material.

From a fabrication point of view, it is preferable if at least one of the surface fastener portions is formed as part of the sheet of material. A fastener portion, in particular a hook portion, can be formed integrally with the sheet by injection moulding.

A common problem which is presented by conventional plant protecting tubes is that in order for the tube to fixed upright around the plant, the tube needs to be inserted deeply, typically at least 20 cm, into the ground. Inserting the tube deeply into the ground can result in the roots of young plants being cut or damaged. Also, rainwater may be trapped close to the roots which can result in accelerated decay of the plant or tree roots.

Therefore, it is a preferred object of the present invention to provide a device for protecting young plants or trees which can rest on the ground or need be only shallowly driven, typically less than 5 cm, into the ground.

Therefore, it is preferable if fixing means are provided to fix the tube to a pole, fence or other object which can be used for support. For example, if the tube is supported by a pole, the fixing means may comprise one or more slits through which the pole can be inserted. In another embodiment one or more holes may be provided in the tube so that the tube may be tied by, string, wire, cable ties etc. to a fence or stake, etc.

Slits may also be provided in the tube so that fertiliser may be supplied to the plant. For example, a small slit may be made in the tube to hold a pellet of solid manure. Such a pellet will be slowly dissolved by rain water and thus a continual supply of fertiliser can be provided to the plant.

Once the plant reaches a certain age, the device protecting the plant is not necessary and may actually hinder the growth of the plant. Therefore, it is preferable if tube can open itself after a period of time. For example, this could be achieved if a surface fastener portion is attached to the tube via an adhesive which loses its stickiness over time.

A particularly useful material for manufacturing the sheet is plastics. Preferably a self supporting plastics sheet is used, that is the sheet can be formed into a tube which is sufficiently rigid to retain its shape. Preferably the sheet is of bio-degardable or photo-degradable material which will degrade at the end of the useful life of the tube. A preferred material for the sheet is polyethylene. The sheet can be quite thin, preferably less than 1mm thick. More preferably it is from about 0.1 to about 0.8mm, preferably about 0.15 to about 0.5 mm and preferably about 0.2mm thick for a tube a few centimeres across.. A larger diameter tube may require a thicker material, such as about 0.3 mm or 0.4 mm thick. Plastics material is particularly hard-wearing, pliable and very light.

A suitable material for the pole is polypropylene.

The present invention will now be described by way of example with reference to the accompanying drawings in which:
Figure 1 illustrates an embodiment of the present invention as it may be manufactured as a roll;
Figure 2 shows a first embodiment of the present invention in use; and
Figure 3 shows a second embodiment of the present invention.

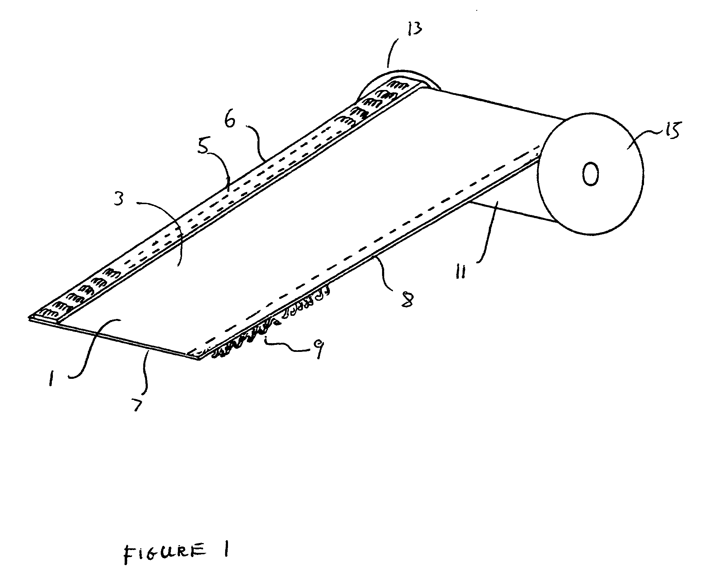

Figure 1 shows a sheet of polyethylene material 1. The sheet is about 0.2 mm thick. On an upper face 3, a strip of loop material 5 is attached close to one edge 6. The loop material is woven polypropylene material and is well known in the art of hook and loop fasteners. Similarly, on the lower face 7, close to the opposite edge 8, a region 9 of hooks is provided. The strip of loop material 5 and the hooks 9 extend along the full length of the edges 6, 8. For clarity, the loops and hooks are shown only along a part of the edges.

The hooks may be provided by attaching a strip of hook material to the sheet 1. However it is particularly preferred if the hooks are moulded with the sheet. They may be integrally moulded with the sheet as the sheet is extruded, for example by extruding the sheet between co-acting rollers as is well known in the art of hook and loop fasteners. In this example about eight rows of hooks are formed adjacent the edge 8, extending along the length of the sheet 1. Alternate rows of hooks face in different directions to enhance the grip with the loop portion 5.

The sheet 1 is provided in a roll 11. Roll 11 has opposite roll side ends 13 and 15. Thus, the material is easily transported. Sheets of material can then be cut from the roll 11 when needed. A particular advantage is that the length of the sheet can be selected by the user, to suit the height of the plant or the perceived risk to weather or animals.

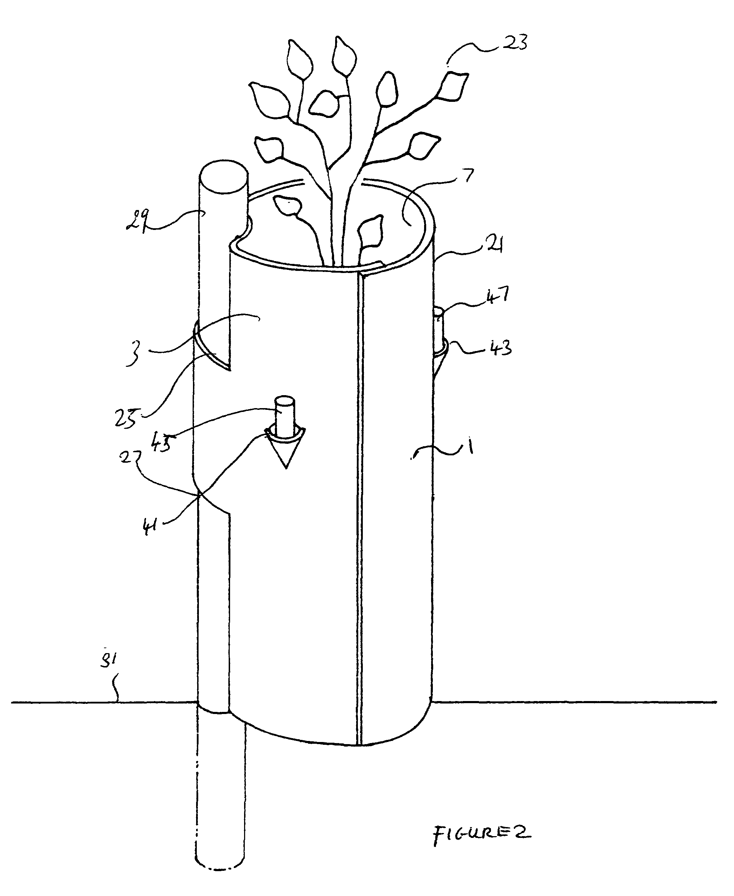

Figure 2 shows an embodiment of the present invention in use. The sheet 1 is bent such that the strip of loops 5 on the upper surface 3 engage with the region of hooks 9 on the lower surface 7 to form a tube 21. The tube 21 can be seen to fit around the plant 23.

Two slits 25 and 27 are formed in the side of the tube 21. These slits 25 and 27 are large enough to accommodate pole 29. The pole 29 is inserted into the ground 31. Thus, the tube 21 is supported by the pole 29 and rests on the ground 31. Tube 21 need not be driven deeply into the ground 31. Therefore, the roots of the plant 23 are not damaged. Also, there is no place for the water to become trapped as the water can easily seep underneath the tube 21.

Single, smaller slits 41 and 43 are also formed in the tube 21. Solid manure or fertilizer pellets 45 and 47 are held in the slits 41, 43. These pellets dissolve on contact with rain water thus feeding the plant. The slits 41 and 43 are cut through the whole material 1, so that a section of the pellets 45 and 47 are exposed to the inside of the tube 21.

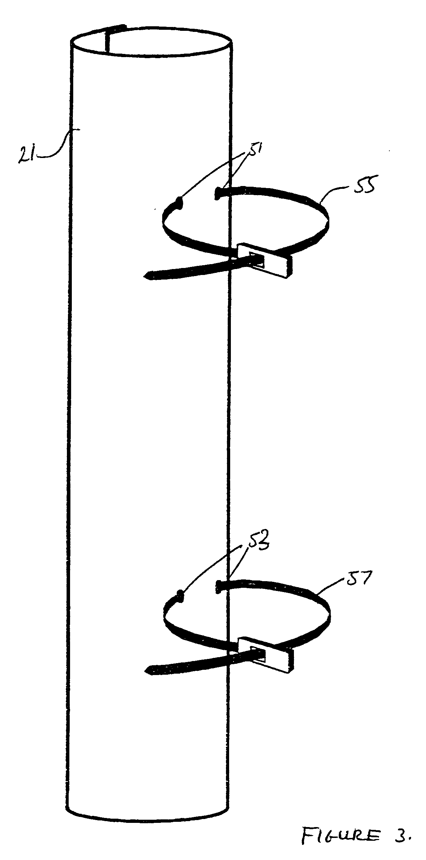

Figure 3 shows a second embodiment of the present invention. The tube 21 is formed in an identical way to the tube 21 of the first embodiment. However, the two slits 25 and 27 are replaced by two pairs of holes 51 and 53. Through these two pairs of holes respectively two cable ties 55 and 57 are inserted. A pole (not shown) may then be inserted through the loops formed by the cable ties 55 and 57. The cable ties may then be pulled tight around the pole so that the pole is fixed to the tube as in embodiment 1. Alternatively, these cable ties 55 and 57 may be fixed around a fence etc. to support the tube 21.

The tube 21 shown in Figure 3 may also rest on the ground level or it may be shallowly lodged into the ground. Slits (not shown) for fertiliser may also be formed in this embodiment.

It will be appreciated that a number of slits and holes may be formed in the sheet material 1 at the time of manufacture, so that the device can be used in a variety of applications.

Preferably the surface fastener is a hook and loop type fastener, but other types of surface fastener may be used. It is particulary preferred that at least one of the surface fastener portions is integrally formed with the sheet.

## Claims

1. A device for protecting young plants, trees or the like, the device comprising a sheet of material (1) which can be rolled or folded to a form a tube, characterised in that a surface fastener (5, 9) is provided on the sheet of material to fasten the sheet (1) in the shape of a tube.

2. A device according to claim 1, characterised in that complementary surface fastener portions (5, 9) are provided at opposite edges (6, 8) of said sheet (1).

3. A device according to claim 1 or 2, characterised in that complementary surface fastener portions (5, 9) are provided on opposite major surfaces (3, 7) of the sheet (1).

4. A device according to claim 1, 2 or 3, characterised in that the surface fastener (5, 9) is a releasable surface fastener.

5. A device according to any preceding claim, characterised in that the surface fastener is a hook and loop fastener (5, 9).

6. A device according to any preceding claim, characterised in that at least one of the surface fastener portions (9) is integrally formed as part of the sheet of material.

7. A device according to any one of claims 1 to 6, characterised in that slits and/or apertures (25, 27, 41, 43, 51, 53) are provided in the sheet of material (1).

8. A device according to claim 7, including a slit (41, 43) for accommodating, in use, a pellet of fertiliser (45, 47).

9. A device according to any one of claims 1 to 8, characterised in that a portion (5) of the fastener is attached to the sheet (1) by an adhesive which loses its stickiness over a predetermined time interval.

10. A roll (11) of sheet material having a surface fastener (5, 9) thereon, for forming the devices of any one of claims 1 to 9.
